(19) Europäisches Patentamt
European Patent Office
Office européen des brevets

(11) EP 1 511 380 B1

(12) EUROPEAN PATENT SPECIFICATION

(45) Date of publication and mention of the grant of the patent:
**18.10.2006 Bulletin 2006/42**

(21) Application number: **03734571.7**

(22) Date of filing: **10.06.2003**

(51) Int Cl.:
***A01N 37/06*** *(2006.01)*

(86) International application number:
**PCT/US2003/018608**

(87) International publication number:
**WO 2003/103393 (18.12.2003 Gazette 2003/51)**

# (54) MIXTURES OF FUSED PYRIMIDINONES AND DINITROPHENOLIC COMPOUNDS USEFUL FOR CONTROLLING POWDERY MILDEWS

MISCHUNGEN VON KONDENSIERTEN PYRIMIDINONEN UND DINITROPHENOLISCHEN VERBINDUNGEN ZUR BEKÄMPFUNG VON MEHLTAU

MELANGES DE PYRIMIDINONES ET DE COMPOSES DINITROPHENOLIQUES UTILES POUR LUTTER CONTRE L'OIDIUM

(84) Designated Contracting States:
**AT BE BG CH CY CZ DE DK EE ES FI FR GB GR HU IE IT LI LU MC NL PT RO SE SI SK TR**

(30) Priority: **11.06.2002 US 387636 P**

(43) Date of publication of application:
**09.03.2005 Bulletin 2005/10**

(73) Proprietor: **E.I. DU PONT DE NEMOURS AND COMPANY**
**Wilmington,**
**Delaware 19898 (US)**

(72) Inventors:
- **GEDDENS, Ray, Michael**
**Newark, DE 19711 (US)**
- **KLAPPROTH, Michael, Caldwell**
**Galena, MD 21635 (US)**

(74) Representative: **Beacham, Annabel Rose**
**Frank B. Dehn & Co.**
**St Bride's House**
**10 Salisbury Square**
**London EC4Y 8JD (GB)**

(56) References cited:

| | |
|---|---|
| EP-B- 0 888 359 | EP-B- 1 015 434 |
| WO-A-94/26722 | US-A- 2 526 660 |
| US-A- 3 234 260 | US-A- 6 066 638 |
| US-B1- 6 245 770 | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 511 380 B1

Printed by Jouve, 75001 PARIS (FR)

## Description

### FIELD OF THE INVENTION

This invention relates to certain mixtures of fused pyrimidinones and dinitrophenolic compounds, their agriculturally suitable salts, and methods of their use as fungicides.

### BACKGROUND OF THE INVENTION

The control of plant diseases caused by fungal plant pathogens is extremely important in achieving high crop efficiency. Plant disease damage to ornamental, vegetable, field, cereal, and fruit crops can cause significant reduction in productivity and thereby result in increased costs to the consumer. Therefore, fungicides that effectively control plant diseases are in constant demand by growers. Many products are commercially available for these purposes. However, the need continues for new products that are more effective, less costly, less toxic, environmentally safer and/or have different modes of action. Plant diseases are highly destructive, difficult to control and quickly develop resistance to commercial fungicides. Combinations of pesticides are often used to facilitate disease control, to broaden spectrum of control and to retard resistance development (see e.g., WO98/33381). It is recognized in the art that the advantages of particular pesticide combinations can often vary, depending on such factors as the particular plant and plant disease to be treated, and the treatment conditions. Accordingly, there is an ongoing search for advantageous combinations of pesticides.

### SUMMARY OF THE INVENTION

This invention relates to synergistic fungicidal combinations (e.g., mixtures) comprising

(1) at least one compound selected from the fused pyrimidinones of Formula I (including all geometric and stereoisomers), *N*-oxides, and suitable salts thereof,

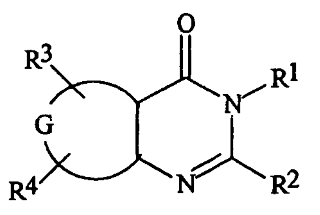

I

wherein

G is a fused phenyl, thiophene or pyridine ring;
$R^1$ is $C_1$-$C_6$ alkyl or $C_4$-$C_7$ cycloalkylalkyl;
$R^2$ is $C_1$-$C_6$ alkyl, $C_1$-$C_6$ alkoxy or $C_1$-$C_6$ alkylthio;
$R^3$ is halogen; and
$R^4$ is hydrogen or halogen; and

(2) at least one dinitrophenolic compound selected from the group consisting of compounds of Formula II and compounds of Formula III (including all geometric and stereoisomers)

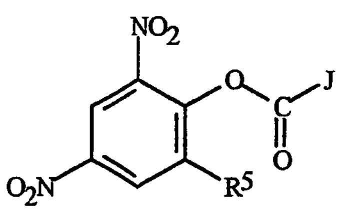

II

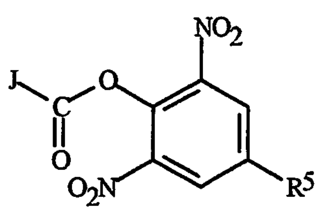

III

wherein

J is $C_1$-$C_6$ alkyl, $C_1$-$C_6$ alkoxy or $C_2$-$C_6$ alkenyl; and
$R^5$ is $C_1$-$C_8$ alkyl.

This invention provides agricultural compositions containing these combinations. This invention also provides a method for controlling plant diseases caused by fungal plant pathogens (especially powdery mildews) comprising applying to the plant or portion thereof, or to the plant seed or seedling, a fungicidally effective amount of these combinations (e.g., as a composition described herein).

DETAILS OF THE INVENTION

Pyrimidinone fungicides of Formula I are described in International Patent Application WO94/26722, U.S. Patent No. 6,066,638, U.S. Patent No. 6,245,770, U.S. Patent No. 6,262,058 and U.S. Patent No. 6,277,858. See these references for methods of preparation of compounds of component (1). The compounds of Formula I can also be referred to as 2-($R^2$)-3-($R^1$)-pyrimidin-4(3*H*)-ones fused at the 5- and 6-positions to G($R^3$)($R^4$).

The dinitrophenolic compounds of Formula II can also be referred to as 1,3-dinitro-5-$R^5$-benzenes further substituted at the 4-position with -OC(=O)J. The dinitrophenolic compounds of Formula III can also be referred to as 1,3-dinitro-5-$R^5$-benzenes further substituted at the 2-position with -OC(=O)J.

Dinitrophenolic compounds of Formula II include a mixture comprising compounds of Formula II wherein J is 1-propenyl and $R^5$ is octyl wherein "octyl" is a mixture of 1-methylheptyl, 1-ethylhexyl and 1-propylpentyl (Formula IIa). A compound of Formula IIa as a single compound is known as the Chemical Abstracts name (*E*)-2-(1-methylheptyl)-4,6-dinitrophenyl 2-butenoate (CAS Registry Number [131-72-6] and the mixture of octyl isomers with unstated stereochemistry has CAS Registry Number [39300-45-3].

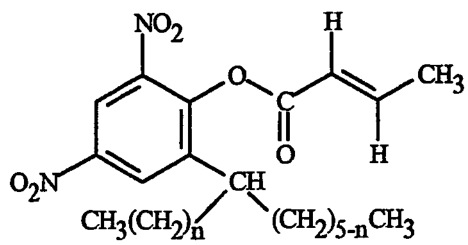

IIa, wherein n is 0, 1 or 2.

Compounds of Formula IIa are commercially available in a mixture comprising 2.0-2.5 parts of Formula IIa to 1.0 parts of Formula IIIa that has the common name dinocap and the IUPAC name 2,6-dinitro-4-octylphenyl crotonates and 2,4-dinitro-6-octylphenyl crotonates in which 'octyl' is a mixture of 1-methylheptyl, 1-ethylhexyl and 1-propylpentyl groups.

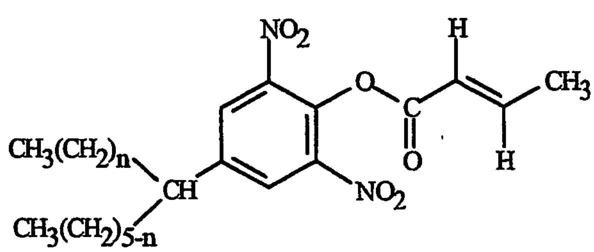

IIIa, wherein n is 0, 1 or 2.

Accordingly, component (2) can be provided by dinocap. Of note are compositions (e.g., mixtures comprising dinocap) that comprise a compound of Formula II and a compound of Formula III. Dinocap is disclosed in U.S. Patent No. 2,526,660 and U.S. Patent No. 2,810,767 as a fungicide and acaricide.

Dinitrophenolic compounds of Formula II also include a compound of Formula II wherein J is $OCH(CH_3)_2$ and

$R^5$ is $CH(CH_3)CH_2CH_3$ (Formula IIb). Formula IIb is also known as the Chemical Abstracts name 1-methylethyl 2-(1-methylpropyl)-4,6-dinitrophenyl carbonate (CAS Registry Number [973-21-7], the IUPAC name 2-*sec*-butyl-4,6-dinitrophenyl isopropyl carbonate and the common name dinobuton.

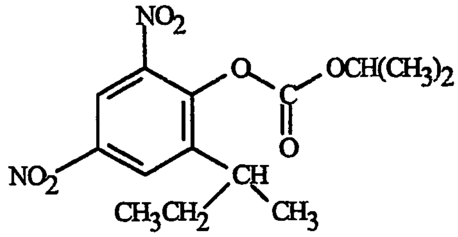

**IIb**

Dinobuton is disclosed in Great Britain Patent No. 1,019,451 as a fungicide and acaricide.

In the above recitations, the term "alkyl", used either alone or in compound words such as "alkylthio" includes straight-chain or branched alkyl, such as methyl, ethyl, *n*-propyl, *i*-propyl, or the different butyl, pentyl or hexyl isomers. "Alkenyl" includes straight-chain or branched alkenes such as ethenyl, 1-propenyl, 2-propenyl, and the different butenyl, pentenyl and hexenyl isomers. "Alkenyl" also includes polyenes such as 1,2-propadienyl and 2,4-hexadienyl. "Alkoxy" includes, for example, methoxy, ethoxy, *n*-propyloxy, isopropyloxy and the different butoxy, pentoxy and hexyloxy isomers. "Alkylthio" includes branched or straight-chain alkylthio moieties such as methylthio, ethylthio, and the different propylthio, butylthio, pentylthio and hexylthio isomers. "Cycloalkyl" includes, for example, cyclopropyl, cyclobutyl, cyclopentyl, and cyclohexyl. "Cycloalkylalkyl" includes alkyl groups substituted with cycloalkyl groups, for example, cyclopropylmethyl, cyclopropylethyl and cyclohexylmethyl.

The term "halogen" includes fluorine, chlorine, bromine or iodine.

The total number of carbon atoms in a substituent group is indicated by the "$C_i$-$C_j$" prefix where i and j are numbers from 1 to 8. When a compound is substituted with a substituent bearing a subscript that indicates the number of said substituents can exceed 1, said substituents (when they exceed 1) are independently selected from the group of defined substituents. Further, when the subscript indicates a range, e.g. $(R)_{i-j}$, then the number of substituents may be selected from the integers between i and j inclusive.

When a group contains a substituent which can be hydrogen, for example $R^4$, then, when this substituent is taken as hydrogen, it is recognized that this is equivalent to said group being unsubstituted.

Compounds suitable for use in accordance with this invention can exist as one or more stereoisomers. The various stereoisomers include enantiomers, diastereomers, atropisomers and geometric isomers. One skilled in the art will appreciate that one stereoisomer may be more active and/or may exhibit beneficial effects when enriched relative to the other stereoisomer(s) or when separated from the other stereoisomer(s). Additionally, the skilled artisan knows how to separate, enrich, and/or to selectively prepare said stereoisomers. Accordingly, the present invention comprises compounds of Formula I, *N*-oxides and suitable salts thereof and Formula II. The compounds may be present as a mixture of stereoisomers, individual stereoisomers, or as optically active forms.

One skilled in the art will appreciate that not all nitrogen containing heterocycles can form *N*-oxides since the nitrogen requires an available lone pair for oxidation to the oxide; one skilled in the art will recognize those nitrogen containing heterocycles which can form *N*-oxides. One skilled in the art will also recognize that tertiary amines can form *N*-oxides. Synthetic methods for the preparation of *N*-oxides of heterocycles and tertiary amines are very well known by one skilled in the art including the oxidation of heterocycles and tertiary amines with peroxy acids such as peracetic and *m*-chloroperbenzoic acid (MCPBA), hydrogen peroxide, alkyl hydroperoxides such as *t*-butyl hydroperoxide, sodium perborate, and dioxiranes such as dimethydioxirane. These methods for the preparation of *N*-oxides have been extensively described and reviewed in the literature, see for example: T. L. Gilchrist in *Comprehensive Organic Synthesis,* vol. 7, pp 748-750, S. V. Ley, Ed., Pergamon Press; M. Tisler and B. Stanovnik in *Comprehensive Heterocyclic Chemistry,* vol. 3, pp 18-20, A. J. Boulton and A. McKillop, Eds., Pergamon Press; M. R. Grimmett and B. R. T. Keene in *Advances in Heterocyclic Chemistry,* vol. 43, pp 149-161, A. R. Katritzky, Ed., Academic Press; M. Tisler and B. Stanovnik in *Advances in Heterocyclic Chemistry,* vol. 9, pp 285-291, A. R. Katritzky and A. J. Boulton, Eds., Academic Press; and G. W. H. Cheeseman and E. S. G. Werstiuk in *Advances in Heterocyclic Chemistry,* vol. 22, pp 390-392, A. R. Katritzky and A. J. Boulton, Eds., Academic Press.

The salts of the compounds comprising this invention include acid-addition salts with inorganic or organic acids such as hydrobromic, hydrochloric, nitric, phosphoric, sulfuric, acetic, butyric, fumaric, lactic, maleic, malonic, oxalic, propionic, salicylic, tartaric, 4-toluenesulfonic or valeric acids. The salts of the compounds comprising this invention also include those formed with organic bases (e.g., pyridine, ammonia, or triethylamine) or inorganic bases (e.g., hydrides,

hydroxides, or carbonates of sodium, potassium, lithium, calcium, magnesium or barium) when the compound contains an acidic group such as a carboxylic acid or phenol.

Preferred compositions for reasons of cost, ease of synthesis and/or biological efficacy are:

Preferred 1. Compositions comprising Formula I above as component (1), and suitable salts thereof, wherein $R^1$ is propyl or cyclopropylmethyl; and $R^2$ is propyloxy or propylthio.

Of note are pyrimidinone fungicides of Formula I selected from the group consisting of
6-bromo-3-propyl-2-propyloxy-4(3*H*)-quinazolinone,
6,8-diiodo-3-propyl-2-propyloxy-4(3*H*)-quinazolinone,
6-iodo-3-propyl-2-propyloxy-4(3*H*)-quinazolinone,
6-chloro-2-propoxy-3-propylthieno[2,3-*d*]pyrimidin-4(3*H*)-one,
6-bromo-2-propoxy-3-propylthieno[2,3-*d*]pyrimidin-4(3*H*)-one,
7-bromo-2-propoxy-3-propylthieno[3,2-*d*]pyrimidin-4(3*H*)-one,
6-bromo-2-propoxy-3-propylpyrido[2,3-*d*]pyrimidin-4(3*H*)-one,
6,7-dibromo-2-propoxy-3-propylthieno[3,2-*d*]pyrimidin-4(3*H*)-one, and
3-(cyclopropylmethyl)-6-iodo-2-(propylthio)pyrido[2,3-*d*]pyrimidin-4(3*H*)-one.

Preferred 2. Compositions of Preferred 1 wherein component (2) is provided by dinocap.

Preferred 3. Compositions of Preferred 2 wherein G is a fused phenyl or thiophene ring; $R^1$ is propyl; $R^2$ is propyloxy; $R^3$ is Cl, Br or I in the 6-position; and $R^4$ is hydrogen.

Preferred 4. Compositions of Preferred 2 wherein component (1) comprises
6-iodo-3-propyl-2-propyloxy-4(3*H*)-quinazolinone or
6-chloro-2-propoxy-3-propylthieno[2,3-*d*]pyrimidin-4(3*H*)-one.

Preferred 5. Compositions of Preferred 4 wherein component (1) comprises
6-iodo-3-propyl-2-propyloxy-4(3*H*)-quinazolinone or

Compositions include those where component (1) and component (2) are present in a fungicidally effective amount and the weight ratio of component (1) to component (2) is from about 1:100 to 1:5000. These compositions are considered to be particularly effective for controlling powdery mildew diseases. Of note are compositions where the weight ratio of component (1) to component (2) is from about 1:125 to 1:4000.

This invention also relates to methods for controlling plant diseases caused by fungal plant pathogens comprising applying to the plant or portion thereof, or to the plant seed or seedling, fungicidally effective amounts of the compositions of the invention (e.g., as a composition described herein). The preferred methods of use include those involving the above preferred compositions; and the diseases controlled with particular effectiveness include powdery mildew diseases. Combinations of fungicides used in accordance with this invention can be used to facilitate disease control and to retard resistance development.

Synergistic Effects

Fungicides that effectively control plant fungi, particularly wheat powdery mildew (*Erysiphe graminis*) are in constant demand by growers. Combinations of fungicides are often used to facilitate disease control and to retard resistance development. Mixtures of fungicides may provide significantly better disease control than could be predicted based on the activity of the individual components. This synergism has been described as "the cooperative action of two components of a mixture, such that the total effect is greater or more prolonged than the sum of the effects of the two (or more) taken independently" (see Tames, P. M. L., *Neth. J. Plant Pathology,* (1964), 70, 73-80). It has been demonstrated that compositions containing compounds exhibit synergistic effects.

The presence of a synergistic effect between two active ingredients is established with the aid of the Colby equation (see Colby, S. R. In *Calculating Synergistic and Antagonistic Responses ofHerbicide Combinations,* Weeds, (1967), 15, 20-22):

$$p = A + B - \left[ \frac{A \times B}{100} \right].$$

Using the methods of the Colby, the presence of a synergistic interaction between two active ingredients is established by first calculating the predicted activity, p, of the mixture based on activities of the two components applied alone. If p is lower than the experimentally established effect, synergism has occurred. In the equation above, A is the fungicidal activity in percentage control of one component applied alone at rate x. The B term is the fungicidal activity in percentage control of the second component applied at rate y. The equation estimates p, the fungicidal activity of the mixture of A at rate x with B at rate y if their effects are strictly additive and no interaction has occurred.

The Colby equation for a three-way mixture is

$$p = A + B + C + \frac{A \times B \times C}{10000} - \left[\frac{(A \times B) + (A \times C) + (B \times C)}{100}\right].$$

wherein A, B and C are the fungicidal activities of the three components respectively.

Compositions are provided in accordance with this invention that comprise proportions of component (1) and component (2) that are especially useful for controlling particular fungal diseases. These compositions are considered especially useful for controlling wheat powdery mildew (*Erysiphe graminis*).

In this application, fungicidal activities provided by compositions of component (1) (Formula I compounds) and component (2) (Formula II compounds) alone are compared with that of compositions of component (1) and component (2) together. Based on the description of synergism developed by Colby, compositions of the present invention are considered to be synergistically useful. Accordingly, this invention provides an improved method of combating powdery mildew diseases, such as wheat powdery mildew (*Erysiphe graminis*) in crops, especially cereals.

Formulation/Utility

This invention provides fungicidal compositions comprising fungicidally effective amounts of the combinations of the invention and at least one additional component selected from the group consisting of surfactants, solid diluents or liquid diluents and/or at least one other fungicide having a different mode of action.

The fungicidal compositions of the present invention comprise an effective amount of a mixture of the compounds (s) of component (1) (e.g., 6-iodo-3-propyl-2-propyloxy-4(3*H*)-quinazolinone -- Compound 1 of Index Table A below) and the compound(s) of component (2) (e.g., dinocap). The mixtures of this invention will typically be used as a formulation or composition with an agriculturally suitable carrier comprising at least one of a liquid diluent, a solid diluent or a surfactant. Accordingly, compositions are provided which comprise, in addition to a fungicidally effective amount of the active compound(s), at least one additional component selected from the group consisting surfactants, solid diluents and liquid diluents. The formulation or composition ingredients are selected to be consistent with the physical properties of the active ingredient, mode of application and environmental factors such as soil type, moisture and temperature. Useful formulations include liquids such as solutions (including emulsifiable concentrates), suspensions, emulsions (including microemulsions and/or suspoemulsions) and the like which optionally can be thickened into gels. Useful formulations further include solids such as dusts, powders, granules, pellets, tablets, films, and the like which can be water-dispersible ("wettable") or water-soluble. Active ingredients can be (micro)encapsulated and further formed into a suspension or solid formulation; alternatively the entire formulation of the active ingredients can be encapsulated (or "overcoated"). Encapsulation can control or delay release of the active ingredients. Sprayable formulations can be extended in suitable media and used at spray volumes from about one to several hundred liters per hectare. High-strength compositions are primarily used as intermediates for further formulation.

The formulations will typically contain effective amounts of active ingredients, diluent and/or surfactant within the following approximate ranges which add up to 100 percent by weight.

| | Weight Percent | | |
|---|---|---|---|
| | Active Ingredient | Diluent | Surfactant |
| Water-Dispersible and Water-soluble Granules, Tablets and Powders. | 5-90 | 0-94 | 1-15 |
| Suspensions, Emulsions, Solutions (including Emulsifiable Concentrates) | 5-50 | 40-95 | 0-15 |
| Dusts | 1-25 | 70-99 | 0-5 |
| Granules and Pellets | 0.01-99 | 5-99.99 | 0-15 |
| High Strength Compositions | 90-99 | 0-10 | 0-2 |

Typical solid diluents are described in Watkins, et al., *Handbook of Insecticide Dust Diluents and Carriers,* 2nd Ed., Dorland Books, Caldwell, New Jersey. Typical liquid diluents are described in Marsden, *Solvents Guide,* 2nd Ed., Interscience, New York, 1950. *McCutcheon's Detergents and Emulsifiers Annual,* Allured Publ. Corp., Ridgewood, New Jersey, as well as Sisely and Wood, *Encyclopedia of Surface Active Agents,* Chemical Publ. Co., Inc., New York, 1964, list surfactants and recommended uses. All formulations can contain minor amounts of additives to reduce foam, caking,

corrosion, microbiological growth and the like, or thickeners to increase viscosity.

Surfactants include, for example, polyethoxylated alcohols, polyethoxylated alkylphenols, polyethoxylated sorbitan fatty acid esters, dialkyl sulfosuccinates, alkyl sulfates, alkylbenzene sulfonates, organosilicones, *N,N*-dialkyltaurates, lignin sulfonates, naphthalene sulfonate formaldehyde condensates, polycarboxylates, and polyoxyethylene/polyoxypropylene block copolymers. Solid diluents include, for example, clays such as bentonite, montmorillonite, attapulgite and kaolin, starch, sugar, silica, talc, diatomaceous earth, urea, calcium carbonate, sodium carbonate and bicarbonate, and sodium sulfate. Liquid diluents include, for example, water, *N,N*-dimethylformamide, dimethyl sulfoxide, *N*-alkylpyrrolidone, ethylene glycol, polypropylene glycol, paraffins, alkylbenzenes, alkylnaphthalenes, oils of olive, castor, linseed, tung, sesame, corn, peanut, cotton-seed, soybean, rape-seed and coconut (which can be methylated), fatty acid esters, ketones such as cyclohexanone, 2-heptanone, isophorone and 4-hydroxy-4-methyl-2-pentanone, and alcohols such as methanol, cyclohexanol, decanol and tetrahydrofurfuryl alcohol.

Solutions, including emulsifiable concentrates, can be prepared by simply mixing the ingredients. Dusts and powders can be prepared by blending and, usually, grinding as in a hammer mill or fluid-energy mill. Suspensions are usually prepared by wet-milling; see, for example, U.S. 3,060,084. Granules and pellets can be prepared by spraying the active materials upon preformed granular carriers or by agglomeration techniques. See Browning, "Agglomeration", *Chemical Engineering,* December 4, 1967, pp 147-48, *Perry's Chemical Engineer's Handbook* 4th Ed., McGraw-Hill, New York, 1963, pages 8-57 and following, and WO 91/13546. Pellets can be prepared as described in U.S. 4,172,714. Water-dispersible and water-soluble granules can be prepared as taught in U.S. 4,144,050, U.S. 3,920,442 and DE 3,246,493. Tablets can be prepared as taught in U.S. 5,180,587, U.S. 5,232,701 and U.S. 5,208,030. Films can be prepared as taught in GB 2,095,558 and U.S. 3,299,566.

For further information regarding the art of formulation, see T. S. Woods, "The Formulator's Toolbox - Product Forms for Modern Agriculture" in *Pesticide Chemistry and Bioscience, The Food—Environment Challenge,* T. Brooks and T. R. Roberts, Eds., Proceedings of the 9th International Congress on Pesticide Chemistry, The Royal Society of Chemistry, Cambridge, 1999, pp. 120-133. See also U.S. 3,235,361, Col. 6, line 16 through Col. 7, line 19 and Examples 10-41; U.S. 3,309,192, Col. 5, line 43 through Col. 7, line 62 and Examples 8, 12, 15, 39, 41, 52, 53, 58, 132, 138-140, 162-164, 166, 167 and 169-182; U.S. 2,891,855, Col. 3, line 66 through Col. 5, line 17 and Examples 1-4; Klingman, *Weed Control as a Science,* John Wiley and Sons, Inc., New York, 1961, pp 81-96; and Hance et al., *Weed Control Handbook,* 8th Ed, Blackwell Scientific Publications, Oxford, 1989.

In the following Examples, all percentages are by weight and all formulations are prepared in conventional ways.

Example A

| Wettable Powder | |
|---|---|
| Active ingredients | 65.0% |
| dodecylphenol polyethylene glycol ether | 2.0% |
| sodium ligninsulfonate | 4.0% |
| sodium silicoaluminate | 6.0% |
| montmorillonite (calcined) | 23.0%. |

Example B

| Granule | |
|---|---|
| Active ingredients | 10.0% |
| attapulgite granules (low volatile matter, 0.71/0.30 mm; U.S.S. No. 25-50 sieves) | 90.0%. |

Example C

| Extruded Pellet | |
|---|---|
| Active ingredients | 25.0% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0%. |

Example D

| Emulsifiable Concentrate | |
|---|---|
| Active ingredients | 20.0% |
| blend of oil soluble sulfonates | |
| and polyoxyethylene ethers | 10.0% |
| isophorone | 70.0%. |

Compositions of this invention can also include one or more other insecticides, fungicides, nematocides, bactericides, acaricides, growth regulators, chemosterilants, semiochemicals, repellents, attractants, pheromones, feeding stimulants or other biologically active compounds to form a multi-component pesticide giving an even broader spectrum of agricultural protection. Examples of such agricultural protectants with which compositions of this invention can be formulated are: insecticides such as abamectin, acephate, azinphos-methyl, bifenthrin, buprofezin, carbofuran, chlorfenapyr, chlorpyrifos, chlorpyrifos-methyl, cyfluthrin, beta-cyfluthrin, cyhalothrin, lambda-cyhalothrin, deltamethrin, diafenthiuron, diazinon, diflubenzuron, dimethoate, esfenvalerate, ethiprole, fenoxycarb, fenpropathrin, fenvalerate, fipronil, flucythrinate, tau-fluvalinate, fonophos, imidacloprid, indoxacarb, isofenphos, malathion, metaldehyde, methamidophos, methidathion, methomyl, methoprene, methoxychlor, monocrotophos, oxamyl, parathion, parathion-methyl, permethrin, phorate, phosalone, phosmet, phosphamidon, pirimicarb, profenofos, rotenone, sulprofos, tebufenozide, tefluthrin, terbufos, tetrachlorvinphos, thiodicarb, tralomethrin, trichlorfon and triflumuron; fungicides such as acibenzolar, azoxystrobin, benomyl, blasticidin-S, Bordeaux mixture (Tribasic copper sulfate), bromuconazole, buthiobate, carpropamid (KTU 3616), captafol, captan, carbendazim, chloroneb, chlorothalonil, clotrimazole, copper oxychloride, copper salts, cymoxanil, cyflufenamid, cyproconazole, cyprodinil (CGA 219417),(*S*)-3,5-dichloro-*N*-(3-chloro-1-ethyl-1-methyl-2-oxopropyl)-4-methylbenzamide (RH 7281), diclocymet (S-2900), diclomezine, dicloran, difenoconazole,(*S*)-3,5-dihydro-5-methyl-2-(methylthio)-5-phenyl- 3-(phenylamino)-4*H*-imidazol-4-one (RP 407213), dimethomorph, dimoxystrobin (SSF-129), diniconazole, diniconazole-M, dodine, econazole, edifenphos, epoxiconazole (BAS 480F), famoxadone, fenarimol, fenbuconazole, fencaramid (SZX0722), fenpiclonil, fenpropidin, fenpropimorph, fentin acetate, fentin hydroxide, fluazinam, fludioxonil, flumetover (RPA 403397), fluoxastrobin, fluquinconazole, flusilazole, flutolanil, flutriafol, folpet, fosetyl aluminum, furalaxyl, furametapyr (S-82658), hexaconazole, imazalil, 6-iodo-3-propyl-2-propyloxy-4(3*H*)-quinazolinone, ipconazole, iprobenfos, iprodione, isoconazole, isoprothiolane, kasugamycin, kresoxim-methyl, mancozeb, maneb, mefenoxam, mepronil, metalaxyl, metconazole, metominostrobin/fenominostrobin (SSF-126), metrafenone, miconazole, myclobutanil, neo-asozin (ferric methanearsonate), nicobifen, nuarimol, orysastrobin, oxadixyl, penconazole, pencycuron, picoxystrobin, probenazole, prochloraz, propamocarb, propiconazole, pyraclostrobin, pyrifenox, pyrimethanil, prochloraz, prothioconazole, pyrifenox, pyroquilon, quinoxyfen, spiroxamine, sulfur, tebuconazole, tetraconazole, thiabendazole, thifluzamide, thiophanate-methyl, thiram, triadimefon, triadimenol, triarimol, tricyclazole, triforine, triticonazole, uniconazole and validamycin; nematocides such as aldoxycarb and fenamiphos; bactericides such as streptomycin; acaricides such as amitraz, chinomethionat, chlorobenzilate, cyhexatin, dicofol, dienochlor, etoxazole, fenazaquin, fenbutatin oxide, fenpropathrin, fenpyroximate, hexythiazox, propargite, pyridaben and tebufenpyrad; and biological agents such as *Bacillus thuringiensis* including ssp. *aizawai* and *kurstaki, Bacillus thuringiensis* delta endotoxin, baculovirus, and entomopathogenic bacteria, virus and fungi. Descriptions of various commercially available compounds listed above may be found in *The Pesticide Manual, Twelfth Edition,* C.D.S. Tomlin, ed., British Crop Protection Council, 2000. For embodiments where one or more of these various mixing partners are used, the weight ratio of these various mixing partners (in total) to the total amount of component (1) and component (2) is typically between 100:1 and 1:3000. Of note are weight ratios between 30:1 and 1:300 (for example ratios between 1:1 and 1: 30). It will be evident that including these additional components may expand the spectrum of diseases controlled beyond the spectrum controlled by the combination of component (1) and component (2) alone.

Compounds of component (1) (e.g. Compound 1) of this invention are considered to control the plant pathogen

via potent, differentiation-specific, inhibition of the infection process. Compounds of component (2) (e.g. dinocap) of this invention are considered to uncouple mitochondrial oxidative phosphorylation. In certain instances, combinations with other fungicides having a different mode of action will be particularly advantageous for resistance management (especially if the other fungicide also has a similar spectrum of control). Of particular note are compositions which in addition to component (1) and component (2) include (3) at least one other fungicide useful in controlling a powdery mildew disease but having a different mode of action from those of component (1) and component (2). Examples of other fungicides having different mode of actions include compounds acting at the *bc*$_1$ complex of the fungal mitochondrial respiratory electron transfer site, compounds acting at the demethylase enzyme of the sterol biosynthesis pathway and morpholine and piperidine compounds that act on the sterol biosynthesis pathway.

The *bc*$_1$ Complex Fungicides

Of note are combinations including component (1), component (2) and at least one strobilurin fungicide. Strobilurin fungicides such as azoxystrobin, dimoxystrobin (SSF-129), fluoxastrobin, kresoxim-methyl, metominostrobin/fenominostrobin (SSF-126), orysastrobin, picoxystrobin, pyraclostrobin and trifloxystrobin are known to have a fungicidal mode of action which inhibits the cytochrome *bc*$_1$ complex in the mitochondrial respiration chain (*Angew. Chem. Int. Ed.,* 1999, *38,* 1328-1349). Methyl (*E*)-2-[[6-(2-cyanophenoxy)-4-pyrimidinyl]oxy]-α-(methoxyimino)benzeneacetate (also known as azoxystrobin) is described as a *bc*$_1$ complex inhibitor in *Biochemical Society Transactions* 1993, *22*, 68S. Methyl (*E*)-α-(methoxyimino)-2-[(2-methylphenoxy)methyl]benzeneacetate (also known as kresoxim-methyl) is described as a *bc*$_1$ complex inhibitor in *Biochemical Society Transactions* 1993, *22*, 64S. (*E*)-2-[(2,5-Dimethylphenoxy)methyl]-α-(methoxyimino)-*N*-methylbenzeneacetamide is described as a *bc*$_1$ complex inhibitor in *Biochemistry and Cell Biology* 1995, *85*(3), 306-311.

Famoxadone and fenamidone are other compounds that inhibit the *bc*$_1$ complex in the mitochondrial respiration chain. Of note are combinations including component (1), component (2) and at least one compound selected from the group consisting of famoxadone and fenamidone.

The *bc*$_1$ complex is sometimes referred to by other names in the biochemical literature, including complex III of the electron transfer chain, and ubihydroquinone:cytochrome c oxidoreductase. It is uniquely identified by the Enzyme Commission number EC 1.10.2.2. The *bc*$_1$ complex is described in, for example, *J. Biol. Chem.* 1989, *264,* 14543-38; *Methods Enzymol.* 1986, *126,* 253-71; and references cited therein. The Fungicide Resistance Action Committee (FRAC) of the Global Crop Protection Federation (GCPF) refers to compounds that inhibit the *bc*$_1$ complex as Qo inhibitors (QoI) since they all act at the Quinol "outer" (Qo) binding site of the cytochrome *bc*$_1$ complex.

The Sterol Biosynthesis Inhibitor (SBI) Fungicides

The class of sterol biosynthesis inhibitors includes DMI and non-DMI compounds, that control fungi by inhibiting enzymes in the sterol biosynthesis pathway. FRAC groups these fungicides together as SBI fungicides. DMI fungicides have a common site of action within the fungal sterol biosynthesis pathway; that is, an inhibition of demethylation at position 14 of lanosterol or 24-methylene dihydrolanosterol, which are precursors to sterols in fungi. Compounds acting at this site are often referred to as demethylase inhibitors, DMI fungicides, or DMIs. The demethylase enzyme is sometimes referred to by other names in the biochemical literature, including cytochrome P-450 (14DM). The demethylase enzyme is described in, for example, *J. Biol. Chem.* 1992, 267, 13175-79 and references cited therein. DMI fungicides fall into several classes: azoles (including triazoles and imidazoles), pyrimidines, piperazines and pyridines. The triazoles include bromuconazole, cyproconazole, difenoconazole, diniconazole, epoxiconazole, fenbuconazole, fluquinconazole, flusilazole, flutriafol, hexaconazole, ipconazole, metconazole, penconazole, propiconazole, prothioconazole, tebuconazole, tetraconazole, triadimefon, triadimenol, triticonazole and uniconazole. The imidazoles include clotrimazole, econazole, imazalil, isoconazole, miconazole and prochloraz. Of particular note are combinations including component (1), component (2) and at least one azole fungicide. The pyrimidines include fenarimol, nuarimol and triarimol. The piperazines include triforine. The pyridines include buthiobate and pyrifenox. Biochemical investigations have shown that all of the above mentioned fungicides are DMI fungicides as described by K. H. Kuck, et al. in *Modern Selective Fungicides - Properties, Applications and Mechanisms of Action,* Lyr, H., Ed.; Gustav Fischer Verlag: New York, 1995, 205-258.

The DMI fungicides have been grouped together to distinguish them from other sterol biosynthesis inhibitors, such as the morpholine and piperidine fungicides and spiroxamine (commonly grouped together by FRAC as the so-called "morpholine" fungicides). The morpholines include aldimorph, dodemorph, fenpropimorph, tridemorph and trimorphamide. The piperidines include fenpropidin. Spiroxamine is a spiroketalamine. The "morpholines" are also sterol biosynthesis inhibitors but have been shown to inhibit other steps in the sterol biosynthesis pathway. Biochemical investigations have shown that all of the above mentioned "morpholine" fungicides are sterol biosynthesis inhibitor fungicides as described by K. H. Kuck, et al. in *Modern Selective Fungicides - Properties, Applications and Mechanisms of Action,* Lyr, H., Ed; Gustav Fischer Verlag: New York, 1995, 185-204. They inhibit to a variable degree the $D^8$®$D^7$

isomerase and D14 reductase enzymes in the sterol biosynthesis pathway. Of note are combinations including component (1), component (2) and at least one "morpholine" fungicide.

Of note are combinations of component (1) (e.g. Compound 1) and component (2) (e.g. dinocap) with azoxystrobin, fluoxastrobin, kesoxim-methyl, trifloxystrobin, pyraclostrobin, picoxystrobin, dimoxystrobin (SSF-129), metominostrobin/ fenominostrobin (SSF-126), carbendazim, chlorothalonil, cyprodinil, quinoxyfen, metrafenone, cyflufenamid, fenpropidine, fenpropimorph, spiroxamine, bromuconazole, cyproconazole, difenoconazole, epoxiconazole, fenbuconazole, fluquinconazole, flusilazole, hexaconazole, ipconazole, metconazole, penconazole, propiconazole, tebuconazole, triticonazole, prochloraz or nicobifen.

Preferred for better control of plant diseases caused by fungal plant pathogens (e.g., lower use rate or broader spectrum of plant pathogens controlled) or resistance management are mixtures of component (1) (e.g. Compound 1) and component (2) (e.g. dinocap) with a fungicide selected from the group consisting of azoxystrobin, kesoxim-methyl, trifloxystrobin, pyraclostrobin, picoxystrobin, dimoxystrobin (SSF-129), metominostrobin/fenominostrobin (SSF-126), quinoxyfen, metrafenone, cyflufenamid, fenpropidine, fenpropimorph, spiroxamine, cyproconazole, epoxiconazole, fluquinconazole, flusilazole, metconazole, propiconazole, tebuconazole and triticonazole.

The compositions of this invention are useful as plant disease control agents. The present invention therefore further comprises a method for controlling plant diseases caused by fungal plant pathogens comprising applying to the plant or portion thereof to be protected, or to the plant seed or seedling to be protected, an effective amount of a composition of the invention. The compositions are particularly effective in controlling powdery mildew diseases caused by fungal plant pathogens. Powdery mildew diseases include powdery mildews in pome fruit, stone fruit, citrus fruit, soft fruit, vines (including grapes), cotton, cucurbits, ornamental plants, tobacco, hops, strawberries and some vegetables, and American gooseberry mildew in gooseberries and currants. Of note are methods for controlling wheat powdery mildew which comprise applying a composition of this invention. The fungal pathogens causing these diseases include *Erysiphe graminis* (the causative agent for cereal powdery mildews in cereal crops such as wheat, oats and barley), *Uncinula necatur* (the causative agent for powdery mildew in grapes), *Sphaerotheca fuliginea* (the causative agent for powdery mildew in cucurbits) and related powdery mildews in the *Erysiphe, Sphaerotheca, Microsphaera* and *Podosphaera* generea and species. Of note are methods for controlling *Erysiphe graminis* which comprise applying a composition of this invention. Particularly when component (1) and component (2) are mixed with additional fungicidal components, the compositions of this invention can also provide control of diseases caused by a broader spectrum of fungal plant pathogens in the Basidiomycete, Ascomycete, Oomycete and Deuteromycete classes. They can be effective in controlling a broad spectrum of plant diseases, particularly foliar pathogens of ornamental, vegetable, field, cereal, and fruit crops. These pathogens include *Plasmopara viticola, Phytophthora infestans, Peronospora tabacina, Pseudoperonospora cubensis, Pythium aphanidennatum, Altemaria brassicae, Septoria nodorum, Septoria tritici, Cercosporidium personatum, Cercospora arachidicola, Pseudocercosporella herpotrichoides, Cercospora beticola, Botrytis cinerea, Monilinia fructicola, Pyricularia oryzae, Podosphaera leucotricha, Venturia inaequalis, Erysiphe graminis, Uncinula necatur, Puccinia recondita, Puccinia graminis, Hemileia vastatrix, Puccinia striiformis, Puccinia arachidis, Rhizoctonia solani, Sphaerotheca fuliginea, Fusarium oxysporum, Verticillium dahliae, Pythium aphanidemzatum, Phytophthora megasperma, Sclerotinia sclerotiorum, Sclerotium rolfsii, Erysiphe polygoni, Pyrenophora teres, Gaeumannomyces graminis, Rynchosporium secalis, Fusarium roseum, Bremia lactucae* and other generea and species closely related to these pathogens.

For example, this invention provides methods for controlling plant diseases caused by fungal plant pathogens comprising applying to the plant or portion thereof to be protected, or to the plant seed or seedling to be protected one of the following:

A) an effective amount of a fungicidal composition comprising component (1), component (2), and at least one additional component selected from the group consisting of surfactants, solid diluents or liquid diluents; or
B) an effective amount of a physical mixture of (i) an effective amount of a first composition comprising component (1) and at least one additional component selected from the group consisting of surfactants, solid diluents or liquid diluents; and (ii) an effective amount of a second composition comprising component (2) and at least one additional component selected from the group consisting of surfactants, solid diluents or liquid diluents.

This invention also provides a method for controlling plant diseases caused by fungal plant pathogens comprising applying to the plant or portion thereof, or to the plant seed or seedling, a fungicidally effective amount of a combination of component (1), component (2) and at least one other fungicide having a different mode of action.

Advantageous methods include those where component (1) and component (2) are added in amounts sufficient to provide a fungicidal effectiveness greater than the sum of the fungicidal effectiveness provided by those amounts of said components taken independently.

Plant disease control is ordinarily accomplished by applying an effective amount of a composition of this invention either pre- or post-infection, to the portion of the plant to be protected such as the roots, stems, foliage, fruit,

seeds, tubers or bulbs, or to the media (soil or sand) in which the plants to be protected are growing. The compositions can also be applied to the seed to protect the seed and seedling. The compositions of this invention are particularly useful when applied pre-infection. The fungicidal compositions of this invention may also comprise (in addition to comprising fungicidally effective amounts of the combination of component (1) and component (2)) at least one additional component selected from the group consisting of surfactants, solid diluents or liquid diluents and/or at least one other fungicide having a different mode of action.

Rates of application for these compositions can be influenced by many factors of the environment and should be determined under actual use conditions. Foliage can normally be protected when treated at a rate of from less than 1 g/ha to 5,000 g/ha of active ingredients. Seed and seedlings can normally be protected when seed is treated at a rate of from 0.1 to 10 g per kilogram of seed.

See Index Table A for descriptions of selected component (1) compounds.

INDEX TABLE A

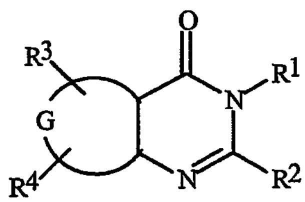

I

| Cmpd. No. | G | $R^1$ | $R^2$ | $R^3$ | $R^4$ | m.p. (˚C.) |
|---|---|---|---|---|---|---|
| 1 | 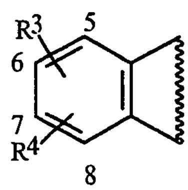 | $CH_2CH_2CH_3$ | $OCH_2CH_2CH_3$ | 6-I | H | 48-49 |
| 2 | 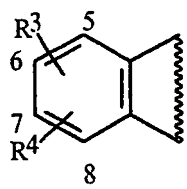 | $CH_2CH_2CH_3$ | $OCH_2CH_2CH_3$ | 6-Br | H | 57-59 |
| 3 | 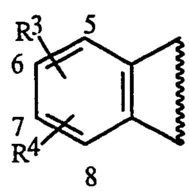 | $CH_2CH_2CH_3$ | $OCH_2CH_2CH_3$ | 6-I | 4-I | 135-138 |
| 4 | 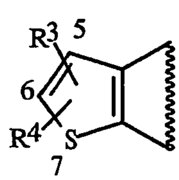 | $CH_2CH_2CH_3$ | $OCH_2CH_2CH_3$ | 6-Cl | H | 69-70 |

(continued)

| Cmpd. No. | G | $R^1$ | $R^2$ | $R^3$ | $R^4$ | m.p. (˚C.) |
|---|---|---|---|---|---|---|
| 5 | 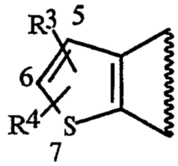 | $CH_2CH_2CH_3$ | $OCH_2CH_2CH_3$ | 6-Br | H | 68-71 |
| 6 | 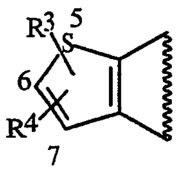 | $CH_2CH_2CH_3$ | $OCH_2CH_2CH_3$ | 7-Br | H | 162-165 |
| 7 | 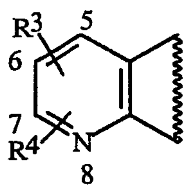 | $CH_2CH_2CH_3$ | $OCH_2CH_2CH_3$ | 6-Br | H | 100-103 |
| 8 | 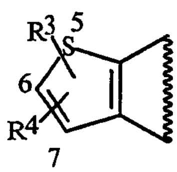 | $CH_2CH_2CH_3$ | $OCH_2CH_2CH_3$ | 6-Br | 7-Br | 94-96 |
| 9 | 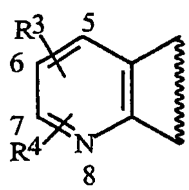 | 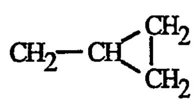 | $SCH_2CH_2CH_3$ | 6-I | H | 159-161 |

Component (2) compounds are available commercially, typically in a formulation. Of particular note, dinocap is commercially available as a 19.5% wettable powder formulation known as Karathane®.

Without further elaboration, it is believed that one skilled in the art using the preceding description can utilize the present invention to its fullest extent. The following Example is, therefore, to be construed as merely illustrative and not limiting of the disclosure in any way whatsoever. Percentages are by weight except where otherwise indicated.

## EXAMPLE 1

The following TESTS demonstrate the control efficacy of compounds of this invention on a specific pathogen. The pathogen control protection afforded by the compounds is not limited, however, to this species.

Test solutions or suspensions comprising a single active ingredient are sprayed to demonstrate the control efficacy of the active ingredient individually. To demonstrate the control efficacy of a combination, (a) the active ingredients can be combined in the appropriate amounts in a single test suspension, (b) stock solutions of individual active ingredients can be prepared and then combined in the appropriate ratio, and diluted to the final desired concentration to form a test suspension or (c) test suspensions comprising single active ingredients can be sprayed sequentially in the desired ratio.

General protocol for preparing test suspensions:

The component (1) compounds can be formulated prior to application in these tests. An example formulation is Example E.

Example E

| Emulsifiable Concentrate | |
|---|---|
| Compound 1 technical material (97%) | 21.1% |
| Methylated seed oil | 68.6 |
| Anionic/nonionic emulsifier blend | 10.3 |

The formulation containing a compound of component (1) is dissolved in water to form a stock solution. For testing component (1) individually the stock solution is diluted to the final desired concentration to form a test solution. For example, the compositions of component (1) (e.g., Compound 1 of Index Table A), either alone or in combination, are sprayed at 0.08 or 0.4 ppm to the point of run-off on the test plants, equivalent to a rate of 0.2 or 1 g/ha, respectively.

The commercially available formulation of component (2) (e.g. the Karathane® 19.5% wettable powder formulation of dinocap) is suspended in water to form a stock suspension. For testing component (2) individually the stock suspension is diluted to the final desired concentration to form a test suspension. For example, dinocap, either alone or in combination, is sprayed at 10, 40 or 200 ppm to the point of run-off on the test plants, equivalent to a rate of 25, 100 or 500 g/ha, respectively.

For testing combinations, the stock suspensions of the individual active ingredients prepared as above are then combined in the appropriate ratio, and diluted to the final desired concentration to form a test suspension.

The resulting test suspensions are then used in the following tests. Test suspensions are sprayed to the point of run-off on the test plants at the rates of active ingredient described below. The tests were replicated three times and the results reported as the average of the three replicates.

TEST A

The test suspension was sprayed to the point of run-off on wheat seedlings. The following day the seedlings were inoculated with a spore dust of *Erysiphe graminis f. sp. tritici,* (the causal agent of wheat powdery mildew) and incubated in a growth chamber at 20 ˚C for 8 days, after which disease ratings were made.

Results for Test A are given in Table A. In the table, a rating of 100 indicates 100% disease control and a rating of 0 indicates no disease control (relative to the controls). Columns labeled Observed Disease Control indicates the average of three replications. Columns labeled Expected Disease Control indicate the expected value for each treatment mixture using the Colby equation. A "- -" indicates that an expected value is not calculated using the Colby equation for single-compound tests. Tests demonstrating control greater than expected are indicated with *.

Table A

| Test Treatment | Application Rate (ppm) | Observed Disease Control (%) | Expected Disease Control (%) |
|---|---|---|---|
| Compound 1 | 0.08 | 80 | -- |
| Compound 1 | 0.4 | 99 | -- |
| Dinocap | 10 | 45 | -- |
| Dinocap | 40 | 76 | -- |
| Dinocap | 200 | 98 | -- |
| Compound 1 + Dinocap | 0.08 + 10 | 95 | 89* |
| Compound 1 + Dinocap | 0.4 + 10 | 99 | 99.45 |
| Compound 1 + Dinocap | 0.08 + 40 | 99 | 95.2* |
| Compound 1 + Dinocap | 0.4 + 40 | 99 | 99.76 |
| Compound 1 + Dinocap | 0.08 + 200 | 99 | 99.6 |
| Compound 1 + Dinocap | 0.4 + 200 | 100 | 99.98 |

Based on the description of synergism developed by Colby, compositions of the present invention are considered to be synergistically useful. Accordingly, this invention provides an improved method of combating powdery mildew diseases, such as wheat powdery mildew (*Erysiphe graminis*) in crops, especially cereals.

## Claims

1. A synergistic fungicidal composition comprising:

(1) at least one compound selected from the fused pyrimidinones of Formula I, *N*-oxides, and suitable salts thereof,

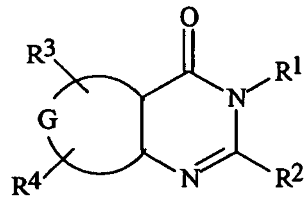

I

wherein

G is a fused phenyl, thiophene or pyridine ring;
$R^1$ is $C_1$-$C_6$ alkyl or $C_4$-$C_7$ cycloalkylalkyl;
$R^2$ is $C_1$-$C_6$ alkyl, $C_1$-$C_6$ alkoxy or $C_1$-$C_6$ alkylthio;
$R^3$ is halogen; and
$R^4$ is hydrogen or halogen; and

(2) at least one dinitrophenolic compound selected from the group consisting of compounds of Formula II and compounds of Formula III

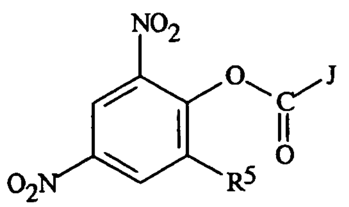

II

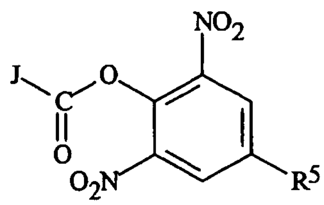

III

wherein

J is $C_1$-$C_6$ alkyl, $C_1$-$C_6$ alkoxy or $C_2$-$C_6$ alkenyl; and
$R^5$ is $C_1$-$C_8$ alkyl.

2. A composition of Claim 1 wherein in component (1), $R^1$ is propyl or cyclopropylmethyl and $R^2$ is propyloxy or propylthio.

3. A composition of Claim 1 or Claim 2 wherein component (2) is provided by dinocap.

4. A composition of Claim 2 or Claim 3 wherein component (1) comprises a compound selected from the group consisting of
6-bromo-3-propyl-2-propyloxy-4(3*H*)-quinazolinone,
6,8-diiodo-3-propyl-2-propyloxy-4(3*H*)-quinazolinone,

6-iodo-3-propyl-2-propyloxy-4(3*H*)-quinazolinone,
6-chloro-2-propoxy-3-propylthieno[2,3-*d*]pyrimidin-4(3*H*)-one,
6-bromo-2-propoxy-3-propylthieno[2,3-*d*]pyrimidin-4(3*H*)-one,
7-bromo-2-propoxy-3-propylthieno[3,2-*d*]pyrimidin-4(3*H*)-one,
6-bromo-2-propoxy-3-propylpyrido[2,3-*d*]pyrimidin-4(3*H*)-one,
6,7-dibromo-2-propoxy-3-propylthieno[3,2-*d*]pyrimidin-4(3*H*)-one, and
3-(cyclopropylmethyl)-6-iodo-2-(propylthio)pyrido[2,3-*d*]pyrimidin-4(3*H*)-one.

**5.** A composition of Claim 3 wherein G is a fused phenyl or thiophene ring; $R^1$ is propyl; $R^2$ is propyloxy; $R^3$ is Cl, Br or I in the 6-position; and $R^4$ is hydrogen.

**6.** A composition of Claim 3 wherein component (1) comprises
6-iodo-3-propyl-2-propyloxy-4(3*H*)-quinazolinone or
6-chloro-2-propoxy-3-propylthieno[2,3-*d*]pyrimidin-4(3*H*)-one.

**7.** A composition of Claim 6 wherein component (1) comprises
6-iodo-3-propyl-2-propyloxy-4(3*H*)-quinazolinone.

**8.** A composition of any of Claims 1 to 7 which comprises a compound of Formula II and a compound of Formula III.

**9.** A composition of any of Claims 1 to 8 which further comprises (3) at least one other fungicide useful in controlling a powdery mildew disease but having a different mode of action from those of component (1) and component (2).

**10.** A composition of Claim 9 wherein component (3) includes at least one fungicide selected from the group consisting of compounds acting at the $bc_1$ complex of the fungal mitochondrial respiratory electron transfer site, compounds acting at the demethylase enzyme of the sterol biosynthesis pathway and morpholine and piperidine compounds that act on the sterol biosynthesis pathway.

**11.** A method for controlling a powdery mildew plant disease caused by a fungal plant pathogen, comprising applying to the plant or portion thereof, or to the plant seed or seedling, a fungicidally effective amount of a composition of any of Claims 1 to 10.

**12.** The method of Claim 11 wherein wheat powdery mildew is controlled.

**13.** The method of Claim 11 wherein the fungal plant pathogen *Erysiphe graminis* is controlled.

## Patentansprüche

**1.** Synergistische, fungizide Zusammensetzung, aufweisend:

(1) mindestens eine Verbindung, die ausgewählt ist aus kondensierten Pyrimidonen der Formel I, N-Oxiden und geeigneten Salzen davon:

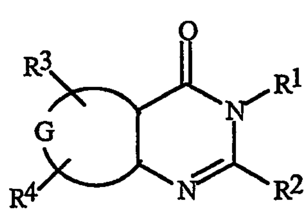

I

worin sind:

G ein kondensierter Phenyl-, Thiophen- oder Pyridinring;

$R^1$ ein $C_1$-$C_6$-Alkyl oder $C_4$-$C_7$-Cycloalkylalkyl;
$R^2$ ein $C_1$-$C_6$-Alkyl, $C_1$-$C_6$-Alkoxy oder $C_1$-$C_6$-Alkylthio;
$R^3$ Halogen und
$R^4$ Wasserstoff oder Halogen; sowie

(2) mindestens eine Dinitrophenol-Verbindung, ausgewählt aus der Gruppe, bestehend aus Verbindungen der Formel II und Verbindungen der Formel III:

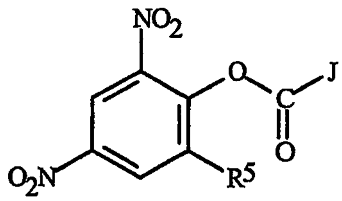
II

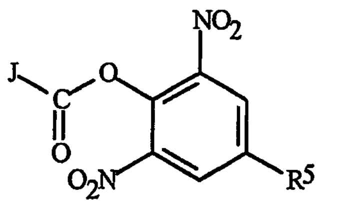
III

worin sind:

J $C_1$-$C_6$-Alkyl, $C_1$-$C_6$-Alkoxy oder $C_2$-$C_6$-Alkenyl und
$R^5$ ist $C_1$-$C_8$-Alkyl

**2.** Zusammensetzung nach Anspruch 1, worin in Komponente (1) $R^1$ Propyl oder Cyclopropylmethyl ist und $R^2$ Propyloxy oder Propylthio ist.

**3.** Zusammensetzung nach Anspruch 1 oder 2, worin Komponente (2) bereitgestellt wird durch Dinocap.

**4.** Zusammensetzung nach Anspruch 2 oder 3, worin Komponente (1) eine Verbindung aufweist, die ausgewählt ist aus der Gruppe, bestehend aus:

6-Brom-3-propyl-2-propyloxy-4(3*H*)-chinazolinon,
6,8-Diod-3-propyl-2-propyloxy-4(3*H*)-chinazolinon,
6-Iod-3-propyl-2-propyloxy-4(3*H*)-chinazolinon,
6-Chlor-2-propoxy-3-propylthieno[2,3-*d*]pyrimidin-4(3*H*)-on,
6-Brom-2-propoxy-3-propylthieno[2,3-*d*]pyrimidin-4(3*H*)-on,
7-Brom-2-propoxy-3-propylthieno[3,2-*d*]pyrimidin-4(3*H*)-on,
6-Brom-2-propoxy-3-propylpyrido[2,3-*d*]pyrimidin-4(3*H*)-on,
6,7-Dibrom-2-propoxy-3-propylthieno[3,2-*d*]pyrimidin-4(3*H*)-on und
3-(Cyclopropylmethyl)-6-iod-2-(propylthio)pyrido[2,3-*d*]pyrimidin-4(3*H*)-on.

**5.** Zusammensetzung nach Anspruch 3, worin G ein kondensierter Phenyl- oder Thiophenring ist; $R^1$ ist Propyl; $R^2$ ist Propyloxy; $R^3$ ist Cl, Br oder I in 6-Stellung; und $R^4$ ist Wasserstoff.

**6.** Zusammensetzung nach Anspruch 3, worin Komponente (1) aufweist:

6-Iod-3-propyl-2-propyloxy-4(3*H*)-chinazolinon oder
6-Chlor-2-propoxy-3-propylthieno[2,3-*d*]pyrimidin-4(3*H*)-on.

**7.** Zusammensetzung nach Anspruch 6, worin Komponente (1) aufweist:

6-Iod-3-propyl-2-propyloxy-4(3*H*)-chinazolinon.

**8.** Zusammensetzung nach einem der Ansprüche 1 bis 7, die eine Verbindung der Formel II aufweist und eine Verbindung der Formel III aufweist.

**9.** Zusammensetzung nach einem der Ansprüche 1 bis 8, ferner aufweisend (3) mindestens ein anderes Fungizid, das zum Bekämpfen einer Mehltau-Erkrankung verwendbar ist, das jedoch gegenüber denen der Komponente (1)

und Komponente (2) ein anderes Wirkungsprinzip hat.

**10.** Zusammensetzung nach Anspruch 9, worin Komponente (3) mindestens ein Fungizid einschließt, das ausgewählt ist aus der Gruppe, bestehend aus Verbindungen, die an dem *bc$_1$*-Komplex der pilzlich-mitochondrischen, respiratorischen Elektronentransferstelle wirken; aus Verbindungen, die auf das Demethylase-Enzym des Sterol-Biosyntheseweges wirken; sowie aus Morpholin- und Piperidin-Verbindungen, die auf den Sterol-Biosyntheseweg wirken.

**11.** Verfahren zur Bekämpfung der Mehltau-Erkrankung von Pflanzen, hervorgerufen durch ein pilzliches Pflanzenpathogen, umfassend das Aufbringen einer fungizid wirksamen Menge einer Zusammensetzung nach einem der Ansprüche 1 bis 10 auf die Pflanze oder einen Teil davon oder auf den Pflanzensamen oder -keim.

**12.** Verfahren nach Anspruch 11, wobei der Weizenmehltau bekämpft wird.

**13.** Verfahren nach Anspruch 11, wobei das pilzliche Pflanzenpathogen *Erysiphe graminis* bekämpft wird.

## Revendications

**1.** Composition fongicide synergique comprenant:

(1) au moins un composé choisi parmi les pyrimidinones condensées de formule I, les *N*-oxydes, et les sels appropriés de ceux-ci,

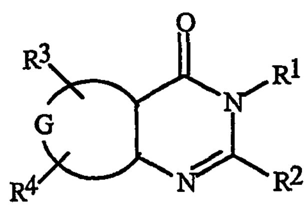

I

dans laquelle

G représente un cycle phényle, thiophène ou pyridine condensé;
$R^1$ représente un groupe alkyle en $C_1$-$C_6$ ou cycloalkylalkyle en $C_4$-$C_7$;
$R^2$ représente un groupe alkyle en $C_1$-$C_6$, alcoxy en $C_1$-$C_6$ ou alkylthio en $C_1$-$C_6$;
$R^3$ représente un atome d'halogène; et
$R^4$ représente un atome d'hydrogène ou d'halogène; et

(2) au moins un composé dinitrophénolique choisi parmi le groupe constitué des composés de formule II et des composés de formule III

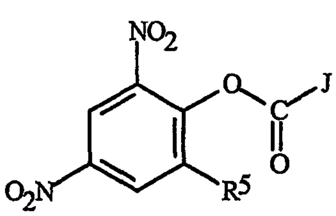

II

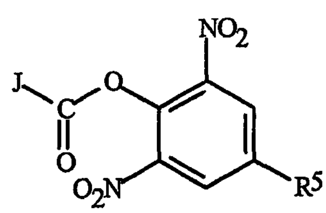

III

dans lesquelles

J représente un groupe alkyle en $C_1$-$C_6$, alcoxy en $C_1$-$C_6$ ou alcényle en $C_2$-$C_6$; et
$R^5$ représente un groupe alkyle en $C_1$-$C_8$.

**2.** Composition selon la revendication 1, dans laquelle dans le composant (1), $R^1$ représente un groupe propyle ou cyclopropylméthyle et $R^2$ représente un groupe propyloxy ou propylthio.

**3.** Composition selon la revendication 1 ou la revendication 2, dans laquelle le composant (2) est fourni par le dinocap.

**4.** Composition selon la revendication 2 ou la revendication 3, dans laquelle le composant (1) comprend un composé choisi parmi le groupe constitué de
la 6-bromo-3-propyl-2-propyloxy-4(*3H*)-quinazolinone,
la 6,8-diiodo-3-propyl-2-propyloxy-4(*3H*)-quinazolinone,
la 6-iodo-3-propyl-2-propyloxy-4(3*H*)-quinazolinone,
la 6-chloro-2-propoxy-3-propylthiéno[2,3-*d*]pyrimidin-4(3*H*)-one
la 6-bromo-2-propoxy-3-propylthiéno[2,3-*d*]pyrimidin-4(3*H*)-one,
la 7-bromo-2-propoxy-3-propylthiéno[3,2-*d*]pyrimidin-4(3*H*)-one,
la 6-bromo-2-propoxy-3-propylpyrido[2,3-*d*]pyrimidin-4(3*H*)-one,
la 6,7-dibromo-2-propoxy-3-propylthiéno[3,2-*d*]pyrimidin-4(3*H*)-one, et
la 3-(cyclopropylméthyl)-6-iodo-2-(propylthio)pyrido[2,3-*d*]pyrimidin-4(3*H*)-one.

**5.** Composition selon la revendication 3, dans laquelle G représente un cycle phényle ou thiophène condensé; $R^1$ représente un groupe propyle; $R^2$ représente un groupe propyloxy; $R^3$ représente un atome de Cl, Br ou I en position 6; et $R^4$ représente un atome d'hydrogène.

**6.** Composition selon la revendication 3, dans laquelle le composant (1) comprend de la 6-iodo-3-propyl-2-propyloxy-4(*3H*)-quinazolinone ou de la 6-chloro-2-propoxy-3-propylthiéno[2,3-*d*]pyrimidin-4(*3H*)-one.

**7.** Composition selon la revendication 6, dans laquelle le composant (1) comprend de la 6-iodo-3-propyl-2-propyloxy-4(*3H*)-quinazolinone.

**8.** Composition selon l'une quelconque des revendications 1 à 7, qui comprend un composé de formule II et un composé de formule III.

**9.** Composition selon l'une quelconque des revendications 1 à 8, qui comprend en outre (3) au moins un autre fongicide utile pour contrôler une maladie de mildiou pulvérulent mais ayant un mode d'action différent de ceux du composant (1) et du composant (2).

**10.** Composition selon la revendication 9, dans laquelle le composant (3) inclut au moins un fongicide choisi parmi le groupe constitué des composés agissant aux complexes $bc_1$ du site de transfert d'électron respiratoire mitochondrial fongique, des composés agissant au niveau de l'enzyme déméthylase de la voie de biosynthèse des stérols et des composés morpholine et pipéridine qui agissent sur la voie de biosynthèse des stérols.

**11.** Procédé de régulation d'une maladie végétale de mildiou pulvérulent provoquée par un pathogène végétal fongique, comprenant l'application à la plante ou à une partie de celle-ci, ou à la graine de la plante ou à la plantule, d'une quantité efficace au plan fongicide d'une composition selon l'une quelconque des revendications 1 à 10.

**12.** Procédé selon la revendication 11, dans lequel le mildiou pulvérulent du blé est contrôlé.

**13.** Procédé selon la revendication 11, dans lequel le pathogène végétal fongique *Erysiphe graminis* est contrôlé.